# EUROPÄISCHE PATENTSCHRIFT

(11) **EP 0 810 521 B1**
(45) Veröffentlichungstag und Bekanntmachung des Hinweises auf die Patenterteilung: **28.08.2002**
(21) Anmeldenummer: 97401191.8
(22) Anmeldetag: 29.05.1997
(51) Int. Cl.: G06F 9/44

(54) **Verfahren zur Kennzeichnung von Programmkompatibilität**
Method of visually identifying compatible programs
Procédé pour identifier visuellement des programmes compatibles

(30) Priorität: 31.05.1996 DE 19621828
(43) Veröffentlichungstag der Anmeldung: 03.12.1997
(73) Patentinhaber: ALCATEL, 75008 Paris (FR)
(72) Erfinder: Wajda, Wieslawa Maria, 75210 Keltern (DE)
(74) Vertreter: Rausch, Gabriele, Dr.

(56) Entgegenhaltungen:
- EP-A- 0 480 859
- GB-A- 2 241 629
- EXPLORING TECHNOLOGY - TODAY AND TOMORROW, DALLAS, OCT. 25 - 29, 1987, Nr. -, 25.Oktober 1987, INSTITUTE OF ELECTRICAL AND ELECTRONICS ENGINEERS, Seiten 292-299, XP000094227 GLINERT E P: "OUT OF FLATLAND: TOWARD 3-D VISUAL PROGRAMMING"
- IEEE TRANSACTIONS ON SOFTWARE ENGINEERING, Bd. 14, Nr. 8, 1.August 1988, Seiten 1110-1115, XP000120650 EDEL M: "THE TINKERTOY GRAPHICAL PROGRAMMING ENVIRONMENT"

## Beschreibung

Die vorliegende Erfindung betrifft ein Verfahren zur Kennzeichnung einer Datenformat-Kompatibilität von Programmen, die unter einer Bedieneroberfläche verfügbar sind.

Für die bedienerfreundliche Nutzung von Rechnern wird eine graphische Bedieneroberfläche, wie z. B. Windows der Firma Microsoft, verwendet. Unter einer solchen Bedieneroberfläche sind unterschiedliche Anwendungsprogramme verfügbar. Um einem Bediener des Rechners anzuzeigen, welche Anwendungsprogramme verfügbar sind, werden graphische Sinnbilder in Form von Ikonen in einem Programmanager der Bedieneroberfläche dargestellt. Eine solche Ikone repräsentiert jeweils ein Anwendungsprogramm.

Die verschiedenen verfügbaren Anwendungsprogramme können möglicherweise unterschiedliche Datenformate verarbeiten, so daß nicht ohne weiteres Datenströme zweier oder mehrerer Anwendungsprogramme miteinander gekoppelt werden können. Daten mit einem ersten Datenformat, die von einem ersten Anwendungsprogramm ausgegeben wurden, müssen daher zur Verwendung in einem zweiten Anwendungsprogramm möglicherweise zunächst umformatiert werden, um von dem zweiten Anwendungsprogramm verarbeitet werden zu können.

Möchte der Bediener die Datenströme zweier oder mehrerer Anwendungsprogramme miteinander koppeln, so muß er zunächst ausprobieren, ob diese Datenströme kompatibel sind. Kompatibilität bedeutet dabei, daß die Daten des ersten Datenformats, die von dem ersten Anwendungsprogramm ausgegeben werden, durch das zweite Anwendungsprogramm verarbeitet werden können. In diesem Fall sind die Datenströme des ersten und des zweiten Anwendungsprogramms kompatibel. Mittels eines internen Protokolls tauschen dabei die Anwendungsprogramme Kompatibilitätskodierungen aus.

Es ist die Aufgabe der vorliegenden Erfindung, einem Bediener ein aufwandsarmes und übersichtliches Erkennen von Datenformat-kompatibilität von Programmen zu ermöglichen.

Diese Aufgabe wird durch die technische Lehre des Anspruchs 1 gelöst.

Aufgrund der Erfindung ist es vorteilhafterweise möglich, zu prüfen, ob ein Datenaustausch zwischen zwei oder mehreren Anwendungsprogrammen möglich ist, ohne die Daten der jeweiligen Anwendungsprogramme austauschen zu müssen.

Weitere vorteilhafte Ausgestaltungen der Erfindung sind den abhängigen Patentansprüchen zu entnehmen.

Im folgenden werden zur Verdeutlichung der Erfindung und ihrer Vorteile Ausführungsbeispiele anhand der Figuren 1 bis 3 beschrieben. Es zeigen:
- Fig. 1: ein Ablaufdiagramm eines Ausführungsbeispiels des erfindungsgemäßen Verfahrens,
- Fig. 2: ein Beispiel einer Ikone mit aufgrund des erfindungsgemäßen Verfahrens erzeugten Kennzeichnungen und
- Fig. 3: ein Beispiel einer Aneinanderfügung von mehreren Ikonen zum Feststellen der Programmkompatibilität.

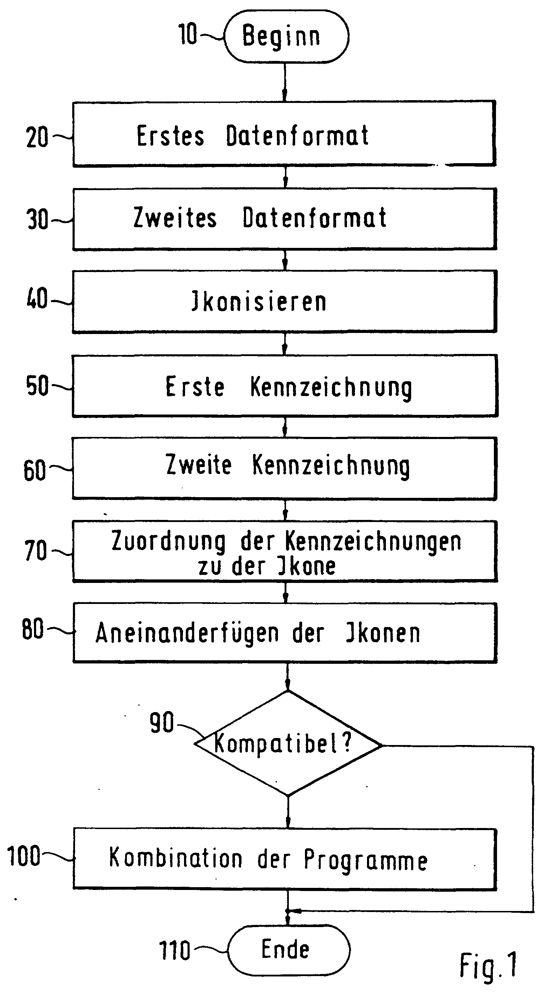

Fig. 1 zeigt ein Ablaufdiagramm eines Ausführungsbeispiels des erfindungsgemäßen Verfahrens. Das erfindungsgemäße Verfahren wird in einem Rechnersystem ausgeführt, das einem Bediener des Rechnersystems eine graphische Bedieneroberfläche zur Verfügung stellt. Die unter dieser Bedieneroberfläche verfügbaren Anwendungsprogramme werden in einem Programmanager der Bedieneroberfläche optisch als graphisches Sinnbild in Form einer Ikone dargestellt.

In einem Schritt 10 des erfindungsgemäßen Verfahrens gemäß des Ausführungsbeispiels der Fig. 1 wird das Verfahren gestartet. In einem Schritt 20 wird daraufhin festgestellt, welches Datenformat ein unter der Bedieneroberfläche verfügbares erstes Anwendungsprogramm verarbeiten kann. Es ist ebenfalls möglich, daß das erste Anwendungsprogramm mehrere Datenformate verarbeiten kann. Im folgenden werden die Datenformate, die das erste Anwendungsprogramm verarbeiten kann als erstes Datenformat bezeichnet. In einem Schritt 30 wird anschließend festgestellt, welches Datenformat diejenigen Daten haben, die von dem ersten Anwendungsprogramm ausgegeben werden. Dieses festgestellte Datenformat wird im folgenden als zweites Datenformat bezeichnet. Das erste Anwendungsprogramm ist dabei so gestaltet, daß es das erste und das zweite Datenformat nach außen signalisiert. Dadurch können das erste und das zweite Datenformat von einem weiteren Programm weiterverarbeitet werden. In einem Schritt 40 wird das erste Anwendungsprogramm in dem Programmanager der Bedienoberfläche ikonisiert, d. h. es wird das graphische Sinnbild für das erste Anwendungsprogramm in dem Programmanager aufgebaut. Gleiches geschieht für die anderen unter der Bedieneroberfläche verfügbaren Anwendungsprogramme. In einem Schritt 50 wird die in dem Schritt 20 festgestellte Information über die verarbeitbaren Datenformate des Anwendungsprogramms in eine erste Kennzeichnung umgewandelt. In einem Schritt 60 wird die in dem Schritt 30 gewonnnene Information über die ausgebbaren Datenformate des ersten Anwendungsprogramms in eine zweite Kennzeichnung umgewandelt. Die erste und die zweite Kennzeichnung können graphische Kennzeichnungen, akustische oder eine sonstig geartete Kennzeichnung sein. Beispiele zur Verwendung als erste und zweite Kennzeichnung sind ein Barkode, ein Farbenkode oder ein Konturenkode. Es ist möglich, die unterschiedlichen Kennzeichnungsarten miteinander zu kombinieren. In einem Schritt 70 werden die erste und die zweite Kennzeichnung der Ikone des ersten Anwendungsprogramms zugeordnet. Vorteilhafterweise wird die erste Kennzeichnung für das Datenformat, das von dem ersten Anwendungsprogramm verarbeitet werden kann, an der oberen Seite der Ikone und die zweite Kennzeichnung für das zweite Datenformat, das von dem ersten Anwendungsprogramm ausgegeben wird, an der unteren Seite der Ikone angebracht. Das andere Programm zur Weiterbehandlung der in den Schritten 20 und 30 gewonnenen Informationen über das erste und das zweite Datenformat zur Umwandlung in die erste bzw. zweite Kennzeichnung wird sinnvollerweise von dem Verfasser des ersten Anwendungsprogrammes erstellt. Dem Verfasser des Anwendungsprogrammes ist am besten bekannt, welche Datenformate von seinem Anwendungsprogramm verarbeitet und ausgegeben werden. Für die Umwandlung des ersten und zweiten Datenformats in die erste bzw. zweite Kennzeichnung sollten dabei für alle verfügbaren Anwendungsprogramme einheitliche Regeln festgelegt werden, so daß eine sichere Überprüfung der Kompatibilität gewährleistet ist. Die Umwandlung in die erste und zweite Kennzeichnung kann allerdings ebenso unabhängig von dem Anwendungsprogramm erfolgen. Beispielsweise könnte das Anwendungsprogramm ausschließlich signalisieren, welches erste und zweite Datenformat verarbeitet bzw. ausgegeben wird, das dann von einem Programm, das unabhängig von dem Anwendungsprogramm ist, in die erste bzw. zweite Kennzeichnung gewandelt wird.

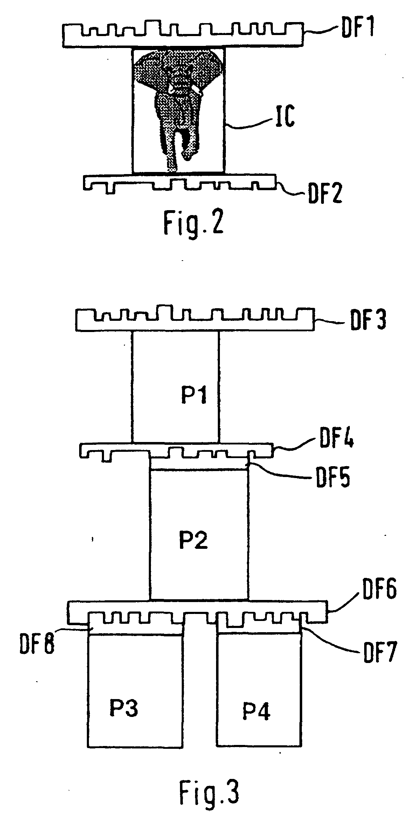

Fig. 2 zeigt ein solches Beispiel einer Ikone IC mit einer ersten Kennzeichnung DF1 und einer zweiten Kennzeichnung DF2. Die Kennzeichnungen DF1 und DF2 sind im vorliegenden Ausführungsbeispiel graphische Kennzeichnungen in Form eines Konturenkodes. Die erste Kennzeichnung DF1 ist an der oberen Seite der Ikone angebracht und stellt eine Repräsentation für das erste Datenformat, das von dem ersten Anwendungsprogramm verarbeitet werden kann, dar. Die zweite Kennzeichnung DF2 ist an der unteren Seite der Ikone IC angebracht und stellt eine Repräsentation für das zweite Datenformat dar, das von dem ersten Anwendungsprogramm ausgegeben wird.

In einem Schritt 80 des Ablaufdiagrammes gemäß der Fig. 1 wird nun die Ikone des ersten Anwendungsprogrammes in dem Programmanager der Bedieneroberfläche mit einer Ikone eines zweiten Anwendungsprogrammes, das unter dieser Bedieneroberfläche verfügbar ist, beispielsweise mittels einer Maus zusammengefügt. Eine solche Zusammenfügung kann beispielsweise mittels des sog. "Drag-and-Drop-Verfahrens" durchgeführt werden, wie es in dem Aufsatz "Drag-and-Drop-Mechanismen in ihren Programmen", Microsoft System Journal, September/October 1992, Seiten 63 bis 64, beschrieben wird. In einem Schritt 90 wird anschließend überprüft, ob das erste und zweite Anwendungsprogramm kompatibel sind. Dies kann beispielsweise dadurch festgestellt werden, daß die zweite Kennzeichnung des ersten Anwendungsprogrammes und die erste Kennzeichnung des zweiten Anwendungsprogrammes ähnlich eines Puzzles zusammengesteckt werden können. Das zweite Datenformat der Daten, die von dem ersten Anwendungsprogramm ausgegeben werden, können dann von dem zweiten Anwendungsprogramm verarbeitet werden.

Fig. 3 zeigt das Beispiel einer solchen Aneinanderfügung einer ersten Ikone P1 mit einer zweiten Ikone P2, einer dritten Ikone P3 und einer vierten Ikone P4. Der ersten Ikone P1 ist an ihrer oberen Seite eine Kennzeichnung DF3 zugeordnet, die angibt, welches Datenformat von dem Anwendungsprogramm, das von der ersten Ikone P1 repräsentiert wird, verarbeitet werden kann. An der unteren Seite der ersten Ikone P1 ist eine Kennzeichnung DF4 angebracht, für ein Datenformat von Daten, die von dem Anwendungsprogramm ausgegeben werden. In die Kennzeichnung DF4 der Ikone P1 ist ein Kennzeichen DF5 einer Ikone P2 eingefügt. Die Kennzeichnung DF5 repräsentiert ein Datenformat von Daten, das von dem durch die Ikone P2 repräsentierten Anwendungsprogramm verarbeitet werden kann. Da die Konturen der Kennzeichnungen DF4 und DF5 zusammenpassen, sind die durch die Ikonen P1 und P2 repräsentierten Anwendungsprogramme zueinander kompatibel. An der unteren Seite des Ikone P2 ist eine Kennzeichnung DF6 angebracht. Diese Kennzeichnung DF6 repräsentiert ein Datenformat von Daten, das von dem durch P2 repräsentierten Anwendungsprogramm ausgegeben wird. In diese Kennzeichnung DF6 ist eine Kennzeichnung DF7 eingefügt, die einer Ikone P4 zugeordnet ist und ein Datenformat repräsentiert, das von dem durch P4 repräsentierten Anwendungsprogramm verarbeitet werden kann. In die Kennzeichnung DF6 ist des weiteren eine Kennzeichnung DF8 eingefügt, die einer Ikone P3 zugeordnet ist und ein Datenformat repräsentiert, das von dem durch die Ikone P3 repräsentierten Anwendungsprogramm verarbeitet werden kann. Sowohl das durch die Ikone P3 repräsentierte Anwendungsprogramm als auch das durch die Ikone P4 repräsentierte Anwendungsprogramm können daher das von dem durch die Ikone P2 repräsentierten Anwendungsprogramm ausgegebene Datenformat verarbeiten.

Wird in dem Schritt 90 gemäß des Ablaufdiagramms der Fig. 1 festgestellt, daß das erste und das zweite Anwendungsprogramm zueinander kompatibel sind, so können in einem Schritt 100 die beiden Anwendungsprogramme miteinander kombiniert werden. Die von dem ersten Anwendungsprogramm ausgegebenen Daten werden dabei direkt in das zweite Anwendungsprogramm eingegeben und von diesem verarbeitet. In einem Schritt 110 wird das erfindungsgemäße Verfahren beendet. Wird in dem Schritt 90 festgestellt, daß das erste und das zweite Anwendungsprogramm nicht kompatibel sind, so überspringt das erfindungsgemäße Verfahren den Schritt 100 und wird beendet.

## Patentansprüche

1. Verfahren zur Kennzeichnung einer Datenformat-Kompatibilität von Programmen, die unter einer Bedieneroberfläche verfügbar sind, auf einer Anzeigevorrichtung eines Rechners,
- bei dem die verfügbaren Programme jeweils als ein graphisches Sinnbild (IC, P1, ..., P4) dargestellt werden,
- bei dem dem graphischen Sinnbild (IC) wenigstens eines der verfügbaren Programme eine erste Kennzeichnung (DF1) zugeordnet wird, die angibt, welches Datenformat von diesem wenigstens einen verfügbaren Programm verarbeitet werden kann.

2. Verfahren nach Anspruch 1,
wobei dem graphischen Sinnbild (IC) des wenigstens einen verfügbaren Programms eine zweite Kennzeichnung (DF2) zugeordnet wird, die angibt, welches Datenformat von diesem wenigstens einen verfügbaren Programm ausgegeben wird.

3. Verfahren nach einem der vorhergehenden Ansprüche,
wobei die erste oder zweite Kennzeichnung (DF1, DF2) eine graphische Kennzeichnung ist.

4. Verfahren nach Anspruch 2,
wobei die erste und zweite Kennzeichnung (DF1, DF2) eine graphische Kennzeichnung ist, und daß die erste Kennzeichnung (DF1) an einer Seite des graphischen Sinnbildes (IC) des wenigstens einen verfügbaren Porgramms und die zweite Kennzeichnung (DF2) an einer anderen Seite angeordnet ist.

5. Verfahren nach Anspruch 3 oder 4,
wobei die graphische Kennzeichnung in Form einer Konturenkodes realisiert wird.

6. Verfahren nach einem der vorhergehenden Ansprüche,
wobei ein erstes graphisches Sinnbild (P1; P2) eines ersten verfügbaren Programmes und ein zweites graphisches Sinnbild (P2; P3, P4) eines zweiten verfügbaren Programmes im Programmanager aneinandergefügt wird, so daß die Datenformat-Kompatibilität des ersten und zweiten Programmes überprüft werden kann.

## Claims

1. Method of marking data-format compatibility of programs that are available through a user interface on a display device of a computer,
- in which the available programs are each displayed as a graphic symbol (IC, P1, ..., P4),
- in which there is assigned to the graphic symbol (IC) at least of one of the available programs a first marker (DF1) that indicates which data format can be processed by said at least one available program.

2. Method according to Claim 1, wherein there is assigned to the graphic symbol (IC) of the at least one available program a second marker (DF2) that indicates which data format is outputted by said at least one available program.

3. Method according to one of the preceding claims, wherein the first or second marker (DF1, DF2) is a graphic marker.

4. Method according to Claim 2, wherein the first and second marker (DF1, DF2) is a graphic marker and wherein the first marker (DF1) is disposed at one side of the graphic symbol (IC) of the at least one available program and the second marker (DF2) is disposed at another side.

5. Method according to Claim 3 or 4, wherein the graphic marker is implemented in the form of a contour code.

6. Method according to one of the preceding claims, wherein a first graphic symbol (P1; P2) of a first available program and a second graphic symbol (P2; P3, P4) of a second available program are combined in the program manager so that the data-format compatibility of the first and second programs can be checked.

## Revendications

1. Procédé pour le marquage d'une compatibilité au niveau du format de données de programmes qui sont disponibles sous une interface utilisateur, sur un dispositif d'affichage d'un ordinateur,
- avec lequel les programmes disponibles sont représentés respectivement sous la forme d'un symbole graphique (IC, P1, ... P4),
- avec lequel on attribue au symbole graphique (IC) d'au moins l'un des programmes disponibles un premier marquage (DF1) qui indique quel format de données peut être traité par ce au moins un programme disponible.

2. Procédé selon la revendication 1, un deuxième marquage (DF2) étant attribué au symbole graphique (IC) du au moins un programme disponible et indiquant quel format de données est édité par ce au moins un programme disponible.

3. Procédé selon l'une quelconque des revendications précédentes, le premier ou le second marquage (DF1, DF2) étant un marquage graphique.

4. Procédé selon la revendication 2, le premier et le second marquage (DF1, DF2) étant un marquage graphique, et le premier marquage (DF1) étant disposé sur un côté du symbole graphique (IC) du au moins un programme disponible et le second marquage (DF2) sur un autre côté.

5. Procédé selon la revendication 3 ou 4, le marquage graphique étant réalisé sous la forme d'un code de contours.

6. Procédé selon l'une quelconque des revendications précédentes, un premier symbole graphique (P1 ; P2) d'un premier programme disponible et un second symbole graphique (P2 ; P3, P4) d'un second programme disponible étant regroupés dans un gestionnaire de programmes, de sorte que la compatibilité au niveau du format du premier et du second programmes peut être vérifiée.
